(19) Europäisches Patentamt
European Patent Office
Office européen des brevets

(11) **EP 4 600 879 A1**

(12) **EUROPEAN PATENT APPLICATION**

(43) Date of publication:
**13.08.2025 Bulletin 2025/33**

(21) Application number: **25156209.6**

(22) Date of filing: **06.02.2025**

(51) International Patent Classification (IPC):
***G06Q 10/08*** (2024.01)　　　***G06Q 50/40*** (2024.01)

(52) Cooperative Patent Classification (CPC):
**G06Q 50/40; G06Q 10/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2024 JP 2024017285**

(71) Applicant: **Kabushiki Kaisha Toshiba
Tokyo 105-0023 (JP)**

(72) Inventors:
• **Yamashita, Michio
105-0023 Tokyo (JP)**
• **Sakakibara, Shizu
105-0023 Tokyo (JP)**

(74) Representative: **Hoffmann Eitle
Patent- und Rechtsanwälte PartmbB
Arabellastraße 30
81925 München (DE)**

(54) **MOBILE UNIT MANAGEMENT DEVICE, MANAGEMENT METHOD, AND STORAGE MEDIUM THAT STORES MANAGEMENT PROGRAM**

(57)　According to one embodiment, a mobile unit management device for a mobile unit includes a managing section. The managing section calculates a score from a conveyance frequency for a workstation of each of shelves arranged in a facility and a distance between each of the shelves and the workstation, and determines a rearrangement position of each of the shelves based on the score and a current position of each of the shelves.

F I G. 1

**Description**

FIELD

Embodiments described herein relate generally to a mobile unit management device, a management method, and a storage medium that stores a management program.

BACKGROUND

As automatization advances in the field of logistics, mobile units such as automated guided vehicles (AGV) have been introduced into an unattended and efficient delivery operation. A mobile unit of this type carries items in accordance with a predetermined task. In recent years, a shelf conveyance system that conveys an item together with a shelf in which the item is stored by a mobile unit is also known.

In a shelf conveyance system using a mobile unit such as an AGV, in order to shorten a shelf conveyance time and improve efficiency, there is a demand to arrange a shelf that is frequently used near and a shelf that is not frequently used far. On the other hand, if the position of the shelf to be rearranged is simply determined only by a use frequency, a travel distance of the mobile unit required for rearrangement becomes long, and the efficiency may be rather lowered.

According to the present embodiment, a mobile unit management device, a management method, and a storage medium that stores a management program can be offered which can effectively rearrange shelves.

BRIEF DESCRIPTION OF DRAWINGS

FIG. 1 is a block diagram of a mobile unit management device according to the present embodiment.
FIG. 2 is a diagram showing exemplary map data representing a travel area stored in a travel area database (DB) .
FIG. 3 is a diagram showing exemplary node information stored in a node DB.
FIG. 4 is a diagram showing exemplary link information stored in a link DB.
FIG. 5 is a flowchart showing an operation of the management device.
FIG. 6 is a diagram showing an acquisition result of a conveyance frequency of an example.
FIG. 7 is a diagram showing an example of a distance acquisition result.
FIG. 8 is a diagram showing a calculation result of a score of an example.
FIG. 9 is a diagram showing an example of a node ID selected for each pod ID.
FIG. 10 is a conceptual diagram for describing a basic concept of a method of determining a rearrangement position.
FIG. 11 is a conceptual diagram of a change of the rearrangement position.
FIG. 12 is a diagram showing an example of a circuit arrangement.
FIG. 13 is a diagram showing an example of sequential conveyance in the case of the circuit arrangement.
FIG. 14 is a conceptual diagram of a method of determining the rearrangement position in a case where the workstation is divided into a workstation dedicated for storage and a workstation dedicated for retrieval.
FIG. 15 is a conceptual diagram of a method of determining the rearrangement position of the shelves in the case of dense arrangement.
FIG. 16 is a conceptual diagram of a method of determining the rearrangement position of the shelves in the case of dense arrangement.
FIG. 17 is a conceptual diagram of a method of determining the rearrangement position in consideration of the improvement rate of the conveyance efficiency.
FIG. 18 is a diagram showing an exemplary hardware structure of the management device.

DETAILED DESCRIPTION

In general, according to one embodiment, a mobile unit management device for a mobile unit includes a managing section. The managing section calculates a score from a conveyance frequency for a workstation of each of shelves arranged in a facility and a distance between each of the shelves and the workstation, and determines a rearrangement position of each of the shelves based on the score and a current position of each of the shelves.

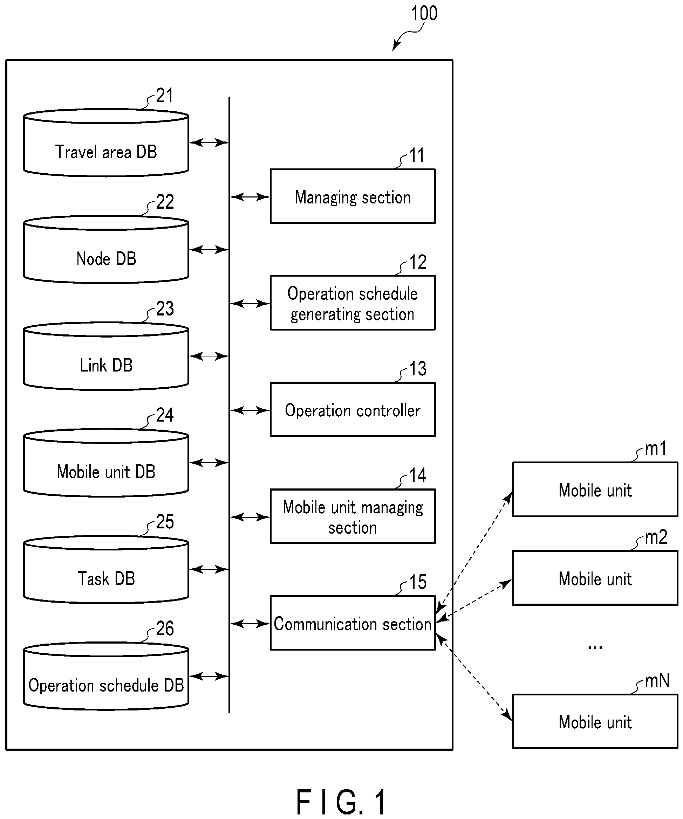

The present embodiment will be described below with reference to the accompanying drawings. FIG. 1 is a block diagram of a mobile unit management device according to the present embodiment. A management device 100 is a computer that manages the operations of the number N (where N is a natural number) of mobile units ml, m2, ..., and mN. Each of the mobile units m1 to mN is an autonomous mobile unit such as an AGV, a picking robot, an autonomous mobile robot, or an automatic driving vehicle, operating in accordance with control commands generated by the management device 100. The mobile units m1 to mN may travel in a facility such as a factory or warehouse, for example. The mobile units m1 to mN may be equipped with a battery so as to be driven in a travel area of the facility with power supplied from the battery. The mobile units m1 to mN may be configured to convey an empty shelf to a workstation (WS), and travel in the facility with items received at the workstation stored in shelves. The mobile units m1 to mN may be configured to autonomously store and retrieve items in and from the shelves. The storage and retrieval of items may be human-powered.

The management device 100 includes a managing section 11, an operation schedule generating section 12, an operation controller 13, a mobile unit managing section 14, and a communication section 15. The management device 100 further includes a travel area database (DB) 21, a node DB 22, a link DB 23, a mobile unit DB 24, a task DB 25, and an operation schedule DB 26. The travel area DB 21, the node DB 22, the link DB 23, mobile unit DB 24, the task DB 25, and the operation schedule DB 26 may be a database stored in a storage provided separately from the management device 100.

The travel area DB 21 is a database in which information of the travel area is stored. The information of the travel area may include map data of the facility such as, for example, a factory or warehouse, in which the travel area of mobile units is defined. The travel area includes coordinate information. The positions of workstations, shelves, and the like in the facility and the positions of temporarily placed objects are associated with coordinates defined in the travel area. The map data may be drawing data that has been predefined by a computer aided design (CAD) or the like. Alternatively, if a mobile unit is provided with a function of creating an environmental map based on its self-location detection function, the map data may be the data of the self-created environmental map.

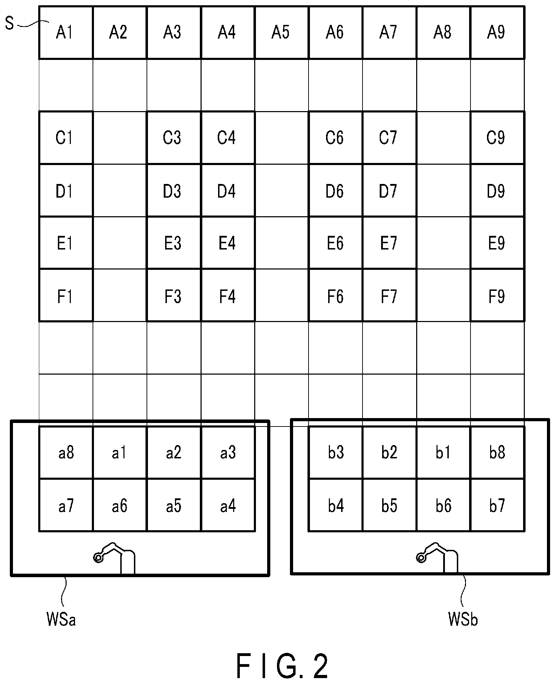

FIG. 2 shows an example of map data representing the travel area stored in the travel area DB 21. FIG. 2 shows an example in which two workstations WSa and WSb and 33 shelves S are arranged in the travel area. Portions other than the workstations WSa, Wsb, and the shelves S are passages. The mobile units m1 to mN may travel on the passages.

In the workstation WSa and the workstation WSb, items are stored in the shelves S or the items are retrieved from the shelves S. In the workstation WSa, the items are stored or retrieved in the order of a1, a2, ..., and a8. Similarly, at the workstation WSb, the items are stored or retrieved in the order of b1, b2, ..., and b8. The items may be stored in each shelf S. Here, the reference sign attached to the shelf S in FIG. 2 is a node ID representing the position of each shelf S.

The node DB 22 and link DB 23 are databases in which information relating to a travel path network is stored. The travel path network includes travel paths of mobile units having a network structure, and the travel paths are defined in association with the travel areas. The travel path network contains nodes and links. A node represents a target position of a mobile unit, which is associated with the coordinates of the travel area. A link represents a connection between nodes.

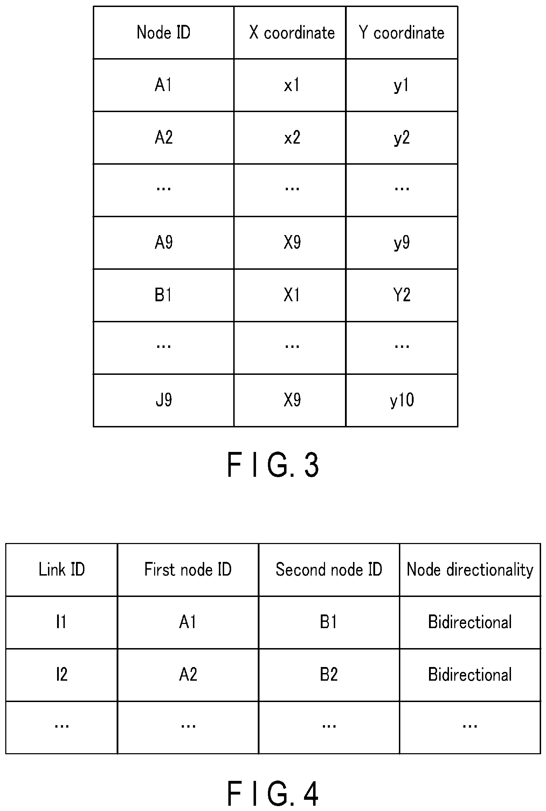

FIG. 3 shows an example of the node information stored in the node DB 22. The node information includes information of node IDs, X coordinates, and Y coordinates. A node ID is uniquely assigned to each node to identify this node. The X coordinate is the X coordinate of the position of a node having a certain node ID on the map data. The Y coordinate is the Y coordinate of the position of a node having a certain node ID on the map data.

FIG. 4 shows an example of the link information stored in the link DB 23. The link information includes information of link IDs, first node IDs, second node IDs, and node directionality. A link ID is uniquely assigned to each link to identify this link. The first node ID is the node ID of a starting node of a link having a certain link ID. The second node ID is the node ID of a destination node of this link. The node directionality represents whether a move between any two nodes is bidirectional or is limited to a unidirectional move. If a bidirectional move is allowed, a mobile unit can move from a starting node to a destination node, or from the destination node to the starting node. If only a unidirectional move is allowed, the mobile unit can move only from the starting node to the destination node.

The mobile unit DB 24 is a database in which the information of each of the mobile units m1 to mN is stored. The mobile unit information includes the real-time positions of the mobile units. These positions may include, for example, the positions of waiting areas of the mobile units. The positions of the mobile units may be acquired from the data received from the mobile units at predetermined intervals, for example. Alternatively, the positions of the mobile units may be acquired from sensors provided in the travel area. If this is the case, the sensor may be provided at each node so that, upon detection of a mobile unit passing this node, for example, the sensor will inform the management device 100 of this detection. The mobile unit information stored in the mobile unit DB 24 may include information other than positional information. For example, the mobile unit information may include their remaining battery levels. If the mobile units are configured to transport items, the mobile unit information may include information regarding whether an item is being carried, and if so, information of the type and number of items that are being transported. The mobile unit information may further include information relating to the specifications of each mobile unit. The information relating to the specifications of each mobile unit may include the standard speed, maximum speed, minimum speed, dimensions, possible driving directions, and the like. If the mobile unit is configured to store and retrieve items, the mobile unit information may include information relating to periods of time required for such jobs.

The task DB 25 is a database in which the task information is stored. The task information represents tasks assigned to each mobile unit. The tasks may be entered by an operator of the management device 100. The task information may include information of task IDs, starting points, and arriving points. A task ID is assigned to each task. The starting point is the node ID of a node at the starting point of a mobile unit. If the mobile unit having the assigned task is not located at the starting point when the task is to be initiated, this mobile unit is controlled to move to the starting point. The arriving point is an arriving point of the mobile unit, for example, a node ID of a position such as a workstation and a shelf. The task information may further include route information in addition to the starting point and arriving point. The route information indicates a node ID of a point that a mobile unit will pass under execution of the task. The task information may also include information of item storage and retrieval jobs and the like to be carried out at the starting point, arriving point, and in-between points, depending on the configuration of the mobile units.

The operation schedule DB 26 is a database in which the operation schedule information generated by the operation schedule generating section 12 is stored. The operation schedule indicates how a mobile unit should be operated in order to complete a task. The operation schedule information includes information of operation schedule IDs, travel routes, and times. An operation schedule ID is assigned to each operation schedule. A travel route indicates a node ID of a point that a mobile unit passes in the operation schedule. A time indicates a scheduled time at which the mobile unit passes the point.

The managing section 11 controls the operation of each of the operation schedule generating section 12, operation controller 13, the mobile unit managing section 14, and the communication section 15. For example, the managing section 11 instructs the operation schedule generating section 12 to generate an operation schedule. The managing section 11 further instructs the operation controller 13 to acquire the operation schedule generated by the operation schedule generating section 12 from the operation schedule DB 26 and control the operations of the mobile units m1 to mN in accordance with this operation schedule.

The operation schedule generating section 12 generates an operation schedule for each of the mobile units m1 to mN, based on the travel area information stored in the travel area DB 21, node DB 22, and link DB 23, the mobile unit information regarding the mobile units m1 to mN stored in the mobile unit DB 24, and the task information stored in the task DB 25. Then, the operation schedule generating section 12 stores the generated operation schedule in the operation schedule DB 26. The operation schedules can be generated with any method. For example, if operation schedules for multiple mobile units need to be simultaneously generated, the operation schedule for each mobile unit may be generated in such a manner that a total travel distance of each mobile unit can be minimized, while preventing the mobile units from colliding with each other.

Upon receipt of an instruction issued by the managing section 11, the operation controller 13 acquires the operation schedule of each mobile unit from the operation schedule DB 26, and generates a control command for the mobile unit based on the acquired operation schedule. The control command includes a command for realizing travel to a node of the destination point entered in the operation schedule. The command for realizing the travel may include information of a node ID, a speed, and the like. If the initial position of the mobile unit does not coincide with the starting point, the travel command may include a command for driving the mobile unit to the node of the starting point. Furthermore, if the mobile units are configured to store and retrieve items, the control command may include a command for performing such a job at destination coordinates or a node. This command includes information of descriptions of the operation. Furthermore, the control command may include a rearrangement command of the shelf S. The rearrangement command of the shelf S includes a command for realizing travel to a certain node of the shelf S of an arrangement source, a command for receiving the shelf S of the arrangement source, a command for realizing travel to a certain node of a rearrangement destination after receiving the shelf S, and a command for rearranging the shelf S at the arrangement destination.

The mobile unit managing section 14 manages the state of each mobile unit. For example, the mobile unit managing section 14 acquires the current positions detected by the sensors of the mobile units m1 to mN by way of the communication section 15, and updates the current position of each mobile unit stored in the mobile unit DB 24 based on the corresponding one of the acquired current positions. Furthermore, the mobile unit managing section 14 may acquire the remaining battery levels of the mobile units m1 to mN by way of the communication section 15, and update the remaining battery level of each mobile unit stored in the mobile unit DB 24 based on the corresponding one of the acquired levels.

The communication section 15 conducts communications between the management device 100 and the mobile units m1 to mN. The communication section 15 may establish wireless communications between the management device 100 and mobile units m1 to mN.

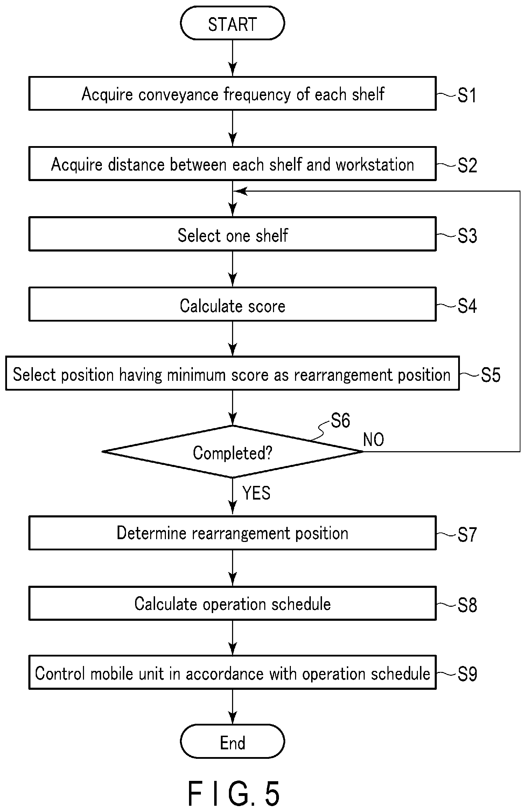

Next, the operations of the management device 100 will be described. FIG. 5 is a flowchart showing the operations of the management device 100. The operation in FIG. 5 is performed in a case where there is at least one mobile unit to which no task is assigned among the mobile units m1 to mN.

In step S1, the managing section 11 of the management device 100 acquires a conveyance frequency of each shelf S based on the past operation schedule stored in the operation schedule DB 26. The conveyance frequency of each shelf S corresponds to a use frequency of the shelf S, and is counted once every time the shelf S is conveyed to the workstation. In a case where there are multiple workstations as in the present embodiment, the conveyance frequency is counted for each workstation. For example, in a case where an operation schedule in which the starting point is the node ID of any of the shelves S and the arriving point is the node ID of the workstation WSa is stored in the operation schedule DB 26, the conveyance frequency for the workstation WSa of the shelf S is counted once. Here, the acquired conveyance frequency may be a conveyance frequency in a past specified period such as one day, one month, or one year. The acquired conveyance frequency is not limited to the past conveyance frequency, and may be a future conveyance frequency counted based on order information that determines assignment of a task.

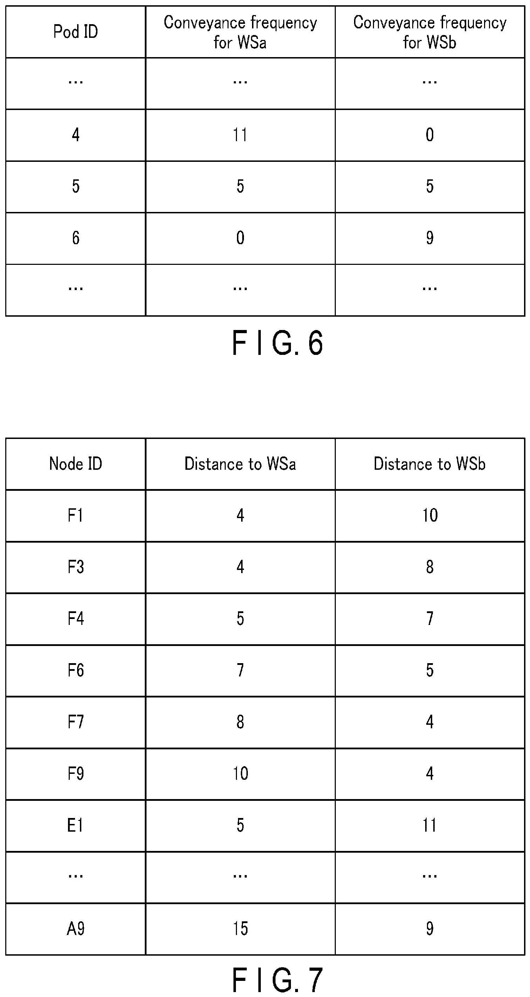

FIG. 6 shows an acquisition result of a conveyance frequency of an example. The acquisition result of the conveyance frequency of an example includes a pod ID, a conveyance frequency for the workstation WSa, and a conveyance frequency for the workstation WSb. A pod ID is uniquely assigned to each shelf S. For example, 33 shelves S are shown in FIG. 2. In this case, any of 33 pod IDs is assigned to each shelf S. Here, the pod ID does not change even if the position of the shelf S changes due to rearrangement. The conveyance frequency for the workstation WSa is a frequency at which the shelf S having a certain pod ID is conveyed to the workstation WSa. The conveyance frequency for the workstation WSb is a frequency at which the shelf S having a certain pod ID is conveyed to the workstation WSb.

In the following description, it is assumed that the pod ID is a numerical value of 1 to 33 assigned in raster order from the upper left to the lower right in the state shown in FIG. 2. At this time, pod ID_1 is assigned to the shelf S located at node ID_A1, and pod ID_2 is assigned to the shelf S located at node ID_A2. Similarly, pod ID_9 is assigned to the shelf S located at node ID_A9, pod ID_10 is assigned to the shelf S located at node ID_C1, and pod ID_33 is assigned to the shelf S located at node ID_F9.

In step S2, the managing section 11 acquires a distance between the node at which each shelf S is arranged and the node at which the workstation Wsa is arranged and a distance between the node at which each shelf S is arranged and the node at which the workstation Wsb is arranged. The distance may be a Manhattan distance between a node of each shelf S and a node of each workstation. As a node of the workstation WSa and a node of the workstation WSb when the Manhattan distance is calculated, a representative node is used. A representative node is any node at which the workstation WSa and the workstation WSb are arranged. For example, the representative node may be a node that is first stored or retrieved. In this case, the representative node of the workstation WSa in FIG. 2 is a node of node ID_I2 (point a1 in FIG. 2). For example, the representative node of the workstation WSb in FIG. 2 is a node (point b1 in FIG. 2) of node ID_I8.

FIG. 7 shows an acquisition result of a distance of an example. The acquisition result of the distance of an example includes a node ID, a distance to the workstation WSa, and a distance to the workstation WSb. The node ID is a node ID of a node at which each shelf S is arranged. The distance to the workstation WSa is a Manhattan distance from a node having a certain node ID to a representative node of the workstation WSa. The distance to the workstation WSb is a Manhattan distance from a node having a certain node ID to a representative node of the workstation WSb.

In step S3, the managing section 11 selects a pod ID of one shelf S as a score calculation target. A pod ID is selected in descending order of the conveyance frequency among the shelves S to which a rearrangement destination is not assigned.

In step S4, the managing section 11 calculates a score for the selected shelf S. A score s may be calculated in accordance with the following equation (1), for example, where fa is a conveyance frequency for the workstation WSa to the shelf S having the pod ID selected in step S3, fb is a conveyance frequency for the workstation WSb of the shelf S having the pod ID selected in step S3, da is a distance to the workstation WSa of a node having each node ID, and db is a distance to the workstation WSb of a node having each node ID.

$$s = (fa \times da) + (fb \times db) \ldots\ldots\ldots (1)$$

Here, equation (1) is a calculation of a score if there are two workstations. On the other hand, equation (1) may be extended if there are more than three workstations. For example, if there are three workstations, the third term including the product of the conveyance frequency of the shelf S having the pod ID selected in step S3 to the third workstation and the distance of the node having each node ID to the third workstation is added to equation (1). The same applies to a case where there are four or more workstations.

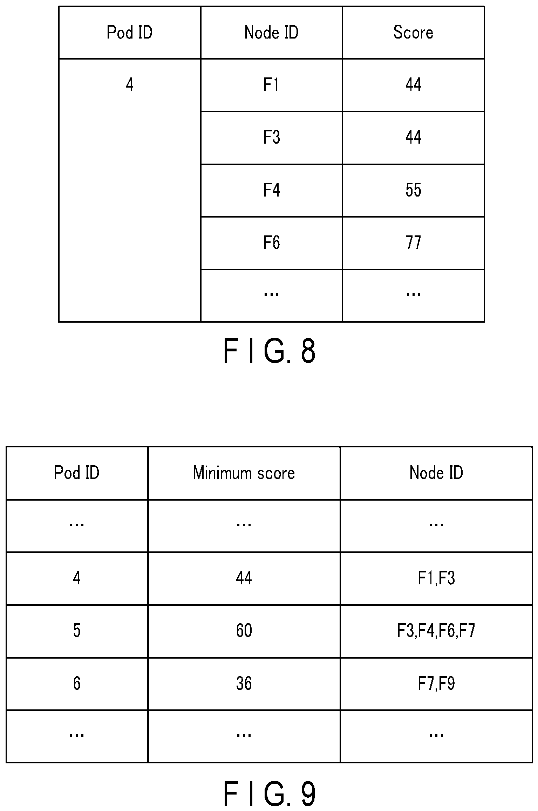

FIG. 8 shows a calculation result of a score of an example. An exemplary calculation result includes a pod ID, a node ID, and a score. A pod ID is the pod ID selected in step S3. In FIG. 8, pod ID_4 is selected. A node ID is a node ID corresponding to each distance acquired in step S2. A score is a score calculated for the shelf S having a certain pod ID.

In step S5, the managing section 11 selects a node ID having a minimum score of the calculated scores as a candidate for the rearrangement position of the shelf S having a certain node ID. If there is a plurality of node IDs having the minimum score, the managing section 11 selects all such node IDs. In the example in FIG. 8, the managing section 11 selects node ID_F1 and node ID_F3.

In step S6, the managing section 11 determines whether the calculation of the score is ended, that is, whether the selection of all the pod IDs is completed. If it is not determined in step S6 that the calculation of the score is ended, the processing returns to step S3. If it is determined in step S6 that the calculation of the score is ended, the processing proceeds to step S7.

In step S7, the managing section 11 determines a final rearrangement position of the shelf S based on the candidate for the rearrangement position of each shelf S. A method of determining the rearrangement position of the shelf S will be described in detail later.

In step S8, the operation schedule generating section 12 generates an operation schedule for rearrangement of the shelf S for a mobile unit to which no task is assigned. The operation schedule in step S8 includes an operation schedule for moving such a mobile unit to a node of a shelf to be rearranged, and an operation schedule for moving the mobile unit keeping the shelf to the rearrangement position.

In step S9, the managing section 11 of the management device 100 acquires, from the operation schedule DB 26, the operation schedule for each mobile unit for rearrangement of the shelf S generated by the operation schedule generating section 12. The managing section 11 causes the operation controller 13 to initiate the control of the operation of each mobile unit in accordance with the corresponding one of the acquired operation schedules. The operation controller 13 generates a control command for the mobile unit based on the operation schedule. Then, the operation controller 13 transmits the control command to the mobile unit by use of the communication section 15 so as to control the operation of the mobile unit. As a result, the rearrangement of the shelf S is completed.

Next, a method of determining the rearrangement position of the shelf S will be described. The rearrangement position may be determined in descending order of the score s and in ascending order of the value of the score s in the case of equation (1). Hereinafter, for example, as shown in FIG. 9, it is assumed that the node ID having the minimum score for each pod ID is selected.

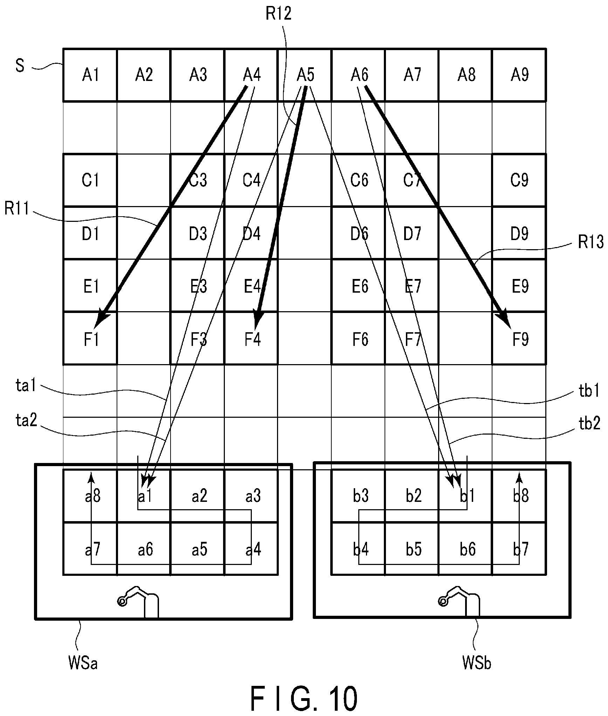

First, a basic concept of the method of determining the rearrangement position will be described with reference to FIG. 10. Basically, the node ID of the final rearrangement position is determined to be the node ID having the shortest travel distance from the current position of the shelf S having a certain pod ID of the node IDs of the candidates of the rearrangement destination that is not assigned as the final rearrangement destination.

For example, in FIG. 9, the node IDs of the candidates of the rearrangement position for the shelf S with pod ID_4 are node ID_F1 and node ID_F3. The Manhattan distances between the node of node ID_A4, which is the current position of the shelf S of pod ID_4, and the node of node ID_F1 and the node of node ID_F3 are both eight. Therefore, the managing section 11 determines the node ID of the final rearrangement position of the shelf S with pod ID_4 to be either node ID_F1 or node ID_F3. For example, the managing section 11 randomly determines the node ID of the final rearrangement position to be node ID_F1 or node ID_F3.

The node IDs of the candidates of the rearrangement position for the shelf S with pod ID_5 are nodes ID_F3, F4, F6, and F7. The Manhattan distances between the node of node ID_A5, which is the current position of the shelf S with pod ID_5, and the node of node ID_F3, the node of node ID_F4, the node of node ID_F6, and the node of node ID_F7 are eight, six, six, and eight. Therefore, the managing section 11 determines the node ID of the rearrangement position of the shelf S with pod ID_5 to be either node ID_F4 or node ID_F6. For example, the managing section 11 randomly determines the node ID of the final rearrangement position to be node ID_F4 or node ID_F6. Here, if the node ID of the rearrangement position for the shelf S with pod ID_4 is determined to be node ID_F3, the managing section 11 may exclude node ID_F3 from the candidates for the rearrangement position.

Furthermore, the node IDs of the candidates of the rearrangement destination for the shelf S with pod ID_6 are node ID_F7 and node ID_F9. The Manhattan distances between the node of node ID_A6, which is the current position of the shelf S with pod ID_6, and the node of node ID_F7 and node ID_F9 are both eight. Therefore, the managing section 11 determines the node ID of the rearrangement position of the shelf S with pod ID_6 to be either node ID_F7 or node ID_F9. For example, the managing section 11 randomly determines the node ID of the final rearrangement position to be node ID_F7 or node ID_F9. Here, if the node ID of the rearrangement position for the shelf S of pod ID_5 is determined to be node ID_F7, the managing section 11 may exclude node ID_F7 from the candidates for the rearrangement position.

FIG. 10 shows an example in which the managing section 11 determines the node ID of the rearrangement position of the shelf S with the pod ID_4 to be node ID_F1 as indicated by an arrow R11, determines the node ID of the rearrangement position of the shelf S with pod ID_5 to be node ID_F4 as indicated by an arrow R12, and determines the node ID of the rearrangement position of the shelf S with pod ID_6 to be node ID_F9 as indicated by an arrow R13. Note that, in the workstations Wsa and Wsb in FIG. 10, arrows indicating the order of storage or retrieval to indicate the representative node are illustrated.

As is clear from equation (1), the score s tends to decrease as a distance multiplied by a greater one of the conveyance frequency fa or the conveyance frequency fb decreases. The conveyance frequency fa, that is, the score s of the shelf S with the pod ID having a higher conveyance frequency for the workstation WSa becomes smaller as the node ID has a shorter distance da to the workstation WSa. This means that the rearrangement position of the shelf S with the pod ID having a higher conveyance frequency for the workstation WSa is likely to be determined to be near the workstation WSa. Similarly the conveyance frequency fb, that is, the score s of the shelf S with the pod ID having a higher conveyance frequency for the workstation WSb becomes smaller as the node ID has a shorter distance db to the workstation WSb. This means that the rearrangement position of the shelf S with the pod ID having a higher conveyance frequency for the workstation WSb is likely to be determined to be near the workstation WSb.

For example, 100% of the conveyance destinations of the shelf S with pod ID_4 currently at the position of node ID_A4 is the workstation WSa indicated by an arrow ta1. Therefore, the rearrangement destination of the shelf S with pod ID_4 may be determined to be a node having a node ID close to the workstation WSa. In addition, 50% of the conveyance destinations of the shelf S with pod ID_5 currently at the position of node ID_A5 is the workstation WSa indicated by an arrow ta2, and the remaining 50% is the workstation WSb indicated by an arrow tb1. In this case, the rearrangement destination of the shelf S with pod ID_5 may be determined to be a node having a node ID that is approximately equal distance to both the workstation WSa and the workstation WSb. Furthermore, 100% of the conveyance destinations of the shelf S with pod ID_6 currently at the position of node ID_A6 is the workstation WSb indicated by an arrow tb2. In this case, the rearrangement destination of the shelf S with pod ID_6 may be determined to be a node having a node ID close to the workstation WSb.

As described above, in the present embodiment, the final rearrangement position is determined in consideration of the distance from the current position of each shelf S to the candidate of the rearrangement position in addition to the score calculated from the conveyance frequency of each shelf S and the distance to the workstation. Specifically, of the node IDs of the candidates of the rearrangement destination, the node ID having the shortest travel distance from the current position of the shelf S having a certain pod ID is determined to be the final rearrangement position. As a result, the travel distance of the mobile units m1 to mN required for rearranging the shelf S may be shortened, and as a result, efficiency of the rearrangement of the shelf S may be improved. The rearrangement of the shelf S is expected to improve the efficiency of conveyance.

(First Modification)

Hereinafter, a modification of the method of determining the rearrangement position of the shelf S will be described. In order to further improve the efficiency of the rearrangement of the shelves S, the plurality of shelves S is desirably conveyed simultaneously at the time of the rearrangement. Then, in a case where the plurality of shelves S is conveyed simultaneously, it is desirable that conveyance routes of the plurality of mobile units do not collide. This is because a collision of the conveyance routes will cause any of the mobile units to stand by at such a position as not to interfere with the movement of the other mobile units.

Therefore, in the operation schedule for each mobile unit generated based on the rearrangement position of each shelf S, in a case where the conveyance routes collide, the managing section 11 may change at least one rearrangement position to another position. Note that the processing of changing the rearrangement position can be omitted if there is room for the mobile unit to stand by.

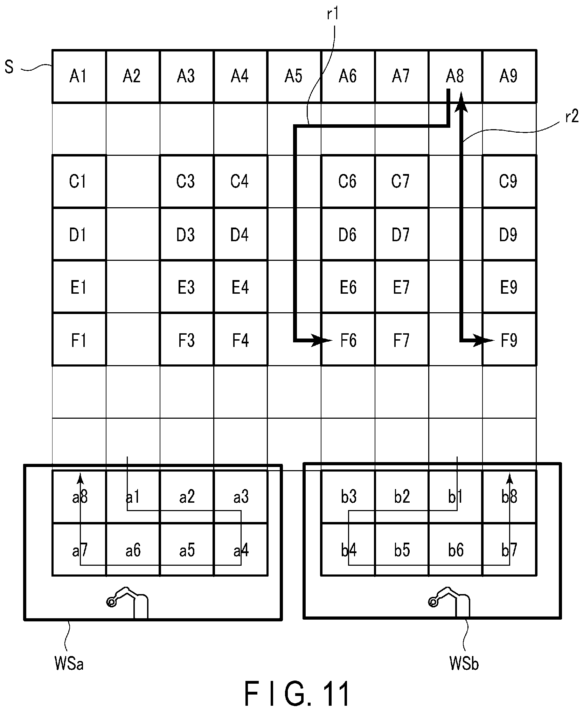

FIG. 11 is a conceptual diagram of a change of the rearrangement position. For example, in FIG. 11, it is assumed that the node ID of the rearrangement position of the shelf S with pod ID_8 is determined to be node ID_F9. On the other hand, in FIG. 11, it is assumed that the node ID of the rearrangement position of the shelf S with pod ID_33 is determined to be node ID_A8. In this case, if the operation schedule is simply generated so as to minimize the conveyance route, both the conveyance route for conveying the shelf S with pod ID_8 and the conveyance route for conveying the shelf S with pod ID_33 become a conveyance route r2. That is, the conveyance routes collide.

In this case, for example, the managing section 11 changes the node ID of the rearrangement position of the shelf S with pod ID_8 to, for example, node ID_F6. As a result, the conveyance route for conveying the shelf S with pod ID_8 is changed to a conveyance route r1. Thus, a collision of the conveyance routes is avoided.

The node ID of the change destination in a case where the conveyance routes collide may be, for example, the node ID of the position having a minimum score and the shortest distance from the position of the current shelf among the node IDs of the candidates of the remaining rearrangement positions. Even if any of the node IDs of the candidates of the remaining rearrangement positions is adopted, the conveyance routes may collide. In this case, the node ID of a node near the node ID of a candidate may be further added to the candidates of the rearrangement positions. As shown in equation (1), the score s is calculated in accordance the distance from the node of each node ID to the workstations WSa and WSb. Therefore, there is a high possibility that the node having the node ID near the node ID of the original candidate also obtains the score equivalent to the node ID of the original candidate although the minimum score is not obtained. Therefore, even a node having a node ID near the original candidate is expected to have improvement in efficiency substantially equivalent to be arranged to the node ID of the original candidate.

Whether the efficiency of the conveyance is actually improved by the rearrangement can be determined by comparing the scores s before and after the rearrangement. That is, if an improvement rate of the score s based on the score s for the node ID of the node where the shelf S is located before the rearrangement and the score s for the node ID of the node where the shelf S is located after the rearrangement is good, it means that the conveyance efficiency is improved by the rearrangement. The improvement rate of the score s is, for example, a ratio of the scores s before and after the rearrangement. For example, in a case where the position of the shelf S changes from a position far from a workstation having a higher conveyance frequency to a position close to a workstation having a high conveyance frequency due to the rearrangement, the ratio of the score s becomes smaller than a threshold. On the other hand, in a case where the position of the shelf S hardly changes by the rearrangement, the ratio of the score s exceeds the threshold. The shelf S having poor conveyance efficiency due to such rearrangement may be excluded from a target of the rearrangement. Furthermore, the managing section 11 may notify a user of the management device 100 of the improvement rate of the conveyance efficiency due to the rearrangement. Such information may be provided with any method, for example through display of the information.

As described above, in a first modification, the rearrangement position is changed so that the conveyance routes do not collide, and the efficiency of the rearrangement may be further improved.

(Second Modification)

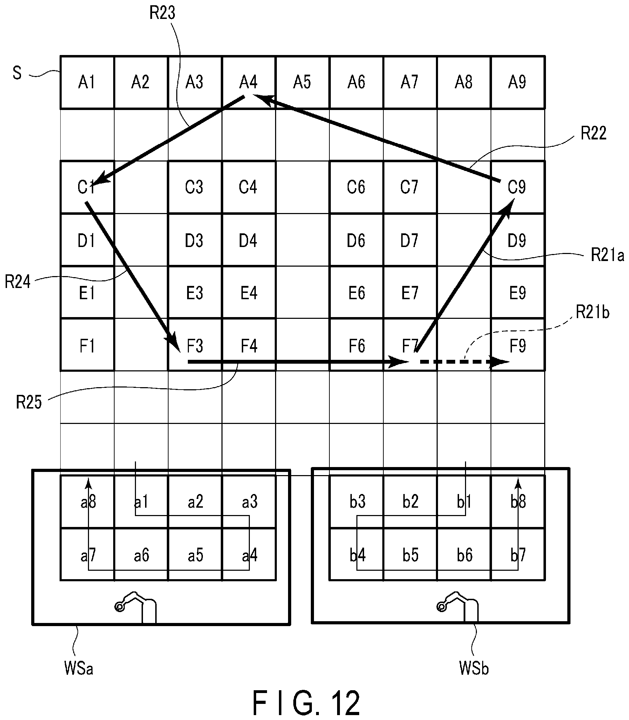

As a method of further improving the efficiency of rearrangement as compared to the method described in the present embodiment and the method described in the first modification, there is a method of circuiting the rearrangement position of the shelf. FIG. 12 is a diagram showing an example of a circuit arrangement. In FIG. 12, the shelves S with pods ID_4, 10, 15, 29, and 32 are included in the circuit arrangement. The circuit arrangement is a determination method of circuiting the rearrangement position by shifting the rearrangement destination one by one among a plurality of shelves. Specifically, the managing section 11 determines the rearrangement position of the shelf S with pod ID_29 at the position of node ID_F7 to be node ID_C9 indicated by an arrow R21a, the rearrangement position of the shelf S with pod ID_15 at the position of node ID_C9 to be node ID_A4 indicated by an arrow R22, the rearrangement position of the shelf S with pod ID_4 at the position of node ID_A4 to be a node ID_C4 indicated by an arrow R23, the rearrangement position of the shelf S with pod ID_10 at the position of node ID_C4 to be node ID_F3 indicated by an arrow R24, and the rearrangement position of the shelf S with pod ID_29 at the position of node ID_F3 to be node ID_F7 indicated by an arrow R25. In this case, another shelf having the rearrangement source as the rearrangement destination is moved at a timing when the shelf as the rearrangement source starts to move to the rearrangement destination, and thus, the conveyance routes do not collide. Furthermore, the task of rearrangement of each shelf is assigned to the same number of five mobile units as the rearrangement positions included in the circuit arrangement. Thus, each mobile unit performs one conveyance, and the rearrangement of all the shelves S is completed. In particular, the rearrangement positions of the shelves S are determined such that the lengths of the conveyance routes of the mobile units are substantially the same, and thus, the times required for rearranging the shelves S become equal. As a result, further efficiency of the rearrangement may be achieved.

Here, if the conveyance routes do not collide, a plurality of circuit arrangements may be performed. Furthermore, in FIG. 12, five shelves S are included in one circuit arrangement, but the number of shelves S included in one circuit arrangement is not limited to five. For example, by changing the rearrangement position of the shelf S with pod ID_29 at the position of node ID_F7 to node ID_F9 indicated by an arrow R21b, the number of shelves S included in the circuit arrangement can be increased since the ring is not closed.

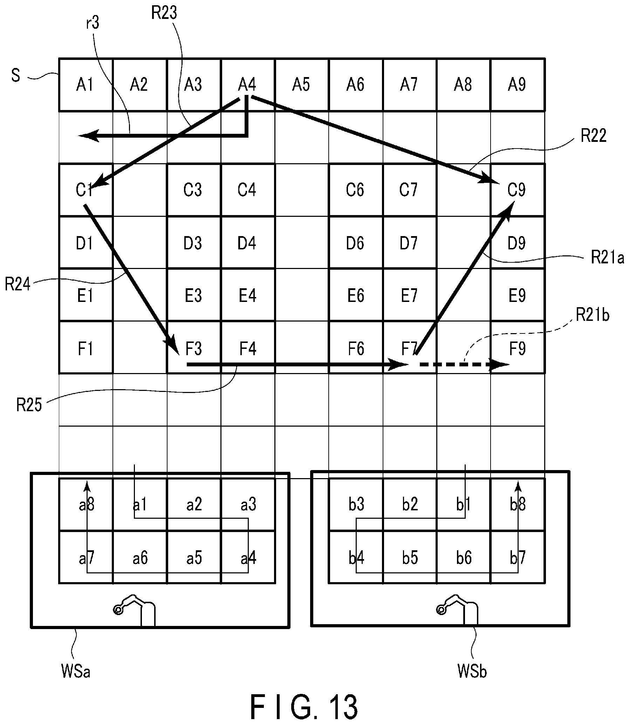

Here, even in the case of the circuit arrangement, the shelves S are not necessarily conveyed simultaneously. For example, the shelves S may be sequentially conveyed. FIG. 13 is a diagram showing an example of sequential conveyance in the case of the circuit arrangement. In the sequential conveyance, the shelves S are conveyed one by one. In this case, when the first rearrangement is performed, the shelf S still exists at the rearrangement position. For example, in a case where the shelf S with pod ID_15 in the node of node ID_C9 is first rearranged to the node of node ID_A4 indicated by the arrow R22, the shelf S with pod ID_4 still exists in the node of node ID_A4. In such a case, as indicated by an arrow r3 in FIG. 13, first, the shelf S with pod ID_4 is conveyed to a temporary position, and then the shelf S with pod ID_15 is conveyed. Thereafter, for example, the shelves S are conveyed in the order of pod IDs _15, 32, 10, and 4. Such sequential conveyance may be performed even in a case where the number of mobile units to which the task of rearrangement can be assigned is smaller than the number of shelves included in the circuit arrangement. The sequential conveyance is not necessarily performed only in the case of the circuit arrangement. For example, as shown in FIG. 13, even in a case where the ring is not closed as in a case where the rearrangement position of the shelf S with pod ID_29 at the position of node ID_F7 is changed to node ID_F9 indicated by the arrow R21b, the sequential conveyance may be performed. The sequential conveyance may be performed in descending order of the improvement rate of the conveyance efficiency, that is, in ascending order of the ratio of the scores s before and after the rearrangement. In this case, if the improvement rate of the conveyance efficiency of the shelf S with pod ID_4 is high, the shelf S with pod ID_4 is first conveyed to the temporary position, and then the shelf S with pod ID_4 may be conveyed to the rearrangement position when the rearrangement position of pod ID_4 becomes vacant. Furthermore, if the rearrangement position of pod ID_4 becomes vacant before the shelf S of the pod ID_4 is conveyed to the temporary position, the conveyance of the shelf S with pod ID_4 to the temporary position may be canceled at that time, and the shelf S with pod ID_4 may be conveyed to the rearrangement position.

As described above, in a second modification, by circuiting the rearrangement position of the shelf S, it is possible to further improve the efficiency of the rearrangement.

(Third Modification)

Some workstations are divided into a workstation dedicated for storage and a workstation dedicated for retrieval.

In the workstation dedicated for storage, only a job of storing items in the shelves is performed. In the workstation dedicated for retrieval, only a job of retrieving items from the shelves is performed. In such a case, it is desirable that the rearrangement position is determined in consideration of information of whether the shelf is empty in addition to the score and the distance from the current position of each shelf S to the candidate of the rearrangement position.

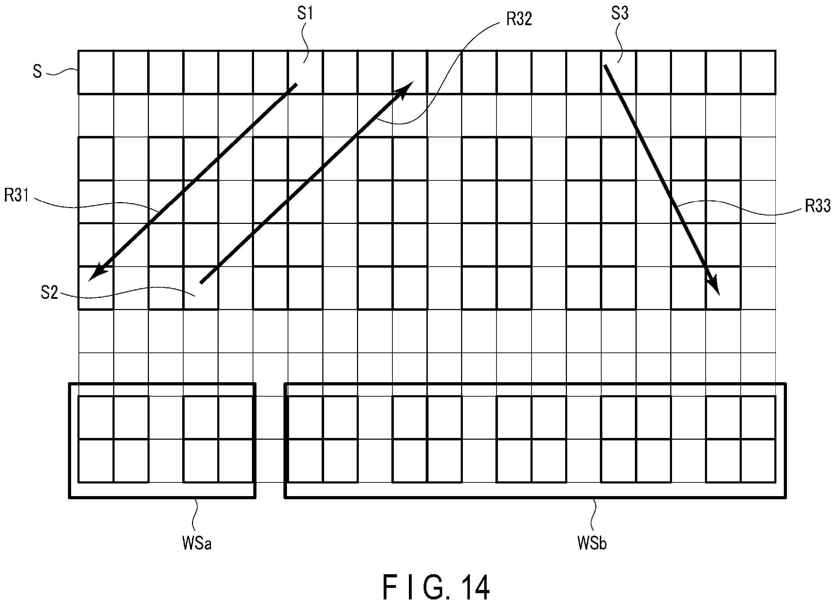

FIG. 14 is a conceptual diagram of a method of determining the rearrangement position in a case where the workstation is divided into a workstation dedicated for storage and a workstation dedicated for retrieval. Here, in FIG. 14, the workstation WSa is a workstation dedicated for storage, and the workstation WSb is a workstation dedicated for retrieval.

Basically, an empty shelf S is conveyed to a workstation dedicated for storage. Conversely, a shelf S that is not empty is basically conveyed to the workstation dedicated for retrieval. Accordingly, the empty shelf S is desirably disposed near the workstation WSa. On the other hand, the shelf S that is not empty is desirably disposed near the workstation WSb. However, among the shelves S that are not empty, the shelf S having a higher conveyance frequency is desirably disposed closer to the workstation WSb than the shelf S having a lower conveyance frequency. For example, if an empty shelf S1 is located at the position of a node ID far from the workstation WSa as a target of rearrangement, the rearrangement position is determined to be close to the workstation WSa, as indicated by an arrow R31. For example, if a shelf S2 that has a lower conveyance frequency and is not empty is located at the position of a node ID far from the workstation WSb as a target of rearrangement, the rearrangement position is determined to be close to the workstation WSb, as indicated by an arrow R32. As a target of the rearrangement, the rearrangement position of the shelf S3 that has a higher conveyance frequency and is not empty is determined so as to be relatively closer to the workstation WSb than the shelf S2 as indicated by an arrow R33. The score s for determining such a rearrangement position may be calculated, for example, in accordance with the following equation (2).

$$s = (1 - w)(fa \times da) + w(fb \times db) \ldots \ldots \ldots (2)$$

Here, w in equation (2) is a weighting coefficient and takes a value of 0 or 1. Specifically, w of the empty shelf S is 0, and w of the shelf S that is not empty is 1. Although w takes a value of 0 or 1 in a simplified manner, w may take a value of 0 or more and 1 or less according to the remaining amount of items in the shelf. In this case, the shelf S having a larger inventory is located closer to the workstation WSb. Equation (2) is a calculation of a score if there are two workstations. Equation (2) may also be extended if there are more than three workstations as in equation (1).

As described above, in a third modification, the conveyance efficiency may be further improved by determining the rearrangement position in accordance with the type of the workstation and whether the shelf S is empty.

(Fourth Modification)

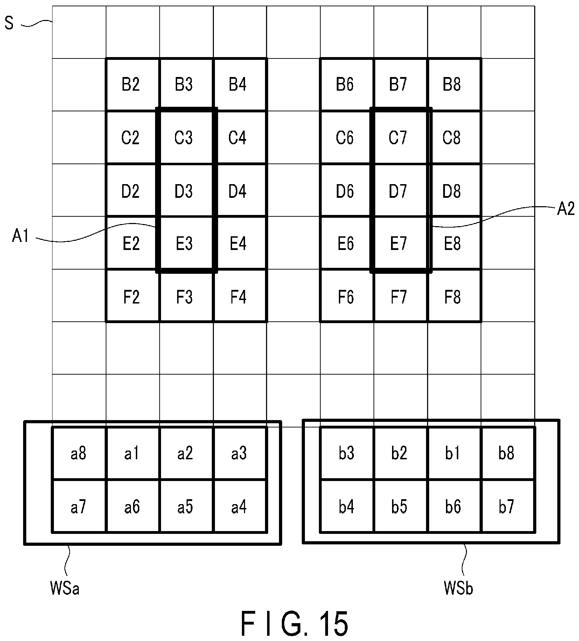

In the embodiment and the modifications described above, it is assumed that all the shelves S face a passage. In this case, the mobile unit may immediately move to a target position. On the other hand, not all the shelves S are necessarily arranged to face the passage, and may be densely arranged as shown in FIG. 15. In a case where the shelf S as a target of rearrangement is surrounded by another shelf S, the other shelf S needs to be conveyed first. Therefore, in the case of the dense arrangement as shown in FIG. 15, even if the conveyance frequency of the shelf S not facing the passage indicated by regions A1 and A2 is high, the managing section 11 determines the rearrangement position of at least one shelf S adjacent to the regions A1 and A2 earlier. For example, in a case where the conveyance frequency of the shelf S located at node ID_D7 is the highest, the managing section 11 determines the rearrangement position of the shelf S located at node ID_D6 or node ID_D8 and then determines the rearrangement position of the shelf S located at node ID_D7. Here, the rearrangement position of the shelf S located at node ID_D6 or node ID_D8 may be the temporary position described in the second modification.

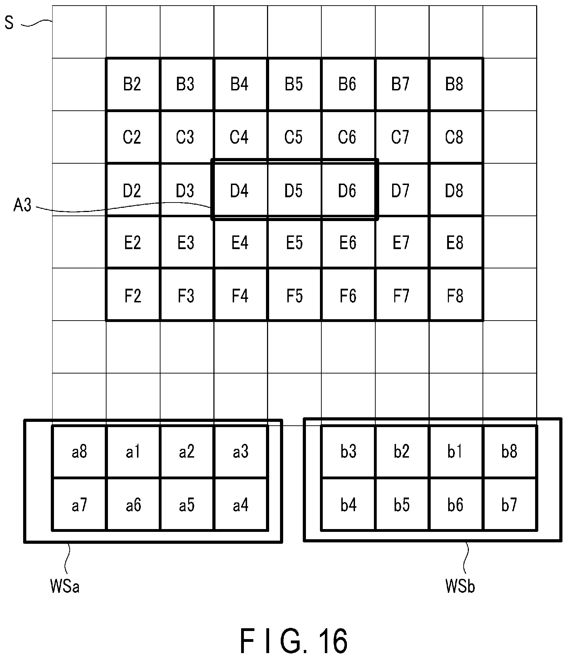

As shown in FIG. 16, the same applies to the dense arrangement in which the shelves S as rearrangement targets are arranged with two or more shelves S sandwiched therebetween from the passage. Even if the conveyance frequency of the shelf S not facing the passage indicated by a region A3 is high, the managing section 11 determines the rearrangement position in order from the shelf S facing the passage. For example, in a case where the conveyance frequency of the shelf S located in node ID_D6 is the highest, the managing section 11 determines the rearrangement position of the shelf S located in node ID_D8, then determines the rearrangement position of the shelf S located in node ID_D7, and then determines the rearrangement position of the shelf S located in node ID_D6. Here, the rearrangement position of the shelf S located at node ID_D8 or node ID_D7 may be the temporary position described in the second modification.

As described above, in a fourth modification, the rearrangement position is appropriately determined even if the shelves S are arranged densely.

(Fifth Modification)

In the embodiment described above, basically all the shelves S may be targets of rearrangement. On the other hand, by using the improvement rate of the conveyance efficiency, that is, the scores s before and after the rearrangement, the number of shelves S as targets of rearrangement may be reduced.

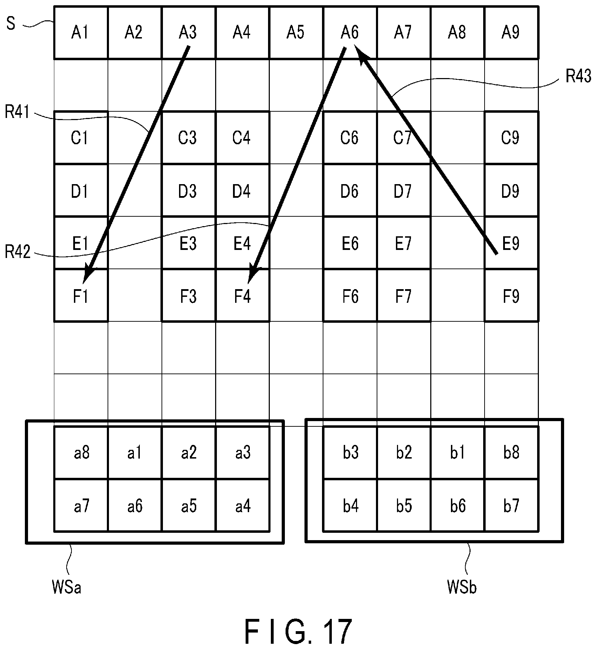

FIG. 17 is a conceptual diagram of a method of determining the rearrangement position in consideration of the improvement rate of the conveyance efficiency. In a fifth modification, the final rearrangement position is determined not in descending order of the score, but in descending order of the improvement rate of the conveyance efficiency, that is, in ascending order of the ratio of the score. Then, when the number of shelves S that need to be moved reaches a certain number, the determination of the rearrangement position ends. This will be specifically described below. In the following specific example, an example in which the certain number is five will be described.

FIG. 17 shows an example in which the rearrangement position of the shelf S with pod ID_3 in the node of node ID_A3 is first determined to be node ID_F1 as indicated by an arrow R41. In this case, the shelves S that need to be moved are two shelves, namely, the shelf S with node ID_A3 and the shelf S with node ID_F1. In this case, since the number of shelves S that need to be moved is less than the certain number, the determination of the rearrangement position is continued.

Next, an example is shown in which the rearrangement position of the shelf S with pod ID_6 at the node of node ID_A6 is determined to be node ID_F4 as indicated by an arrow R42. In this case, the shelves S that need to be moved are four shelves, namely, the shelf S with node ID_A3, the shelf S with node ID_F1, the shelf S with node ID_A6, and the shelf S with node ID_F4. In this case, since the number of shelves S that need to be moved is less than the certain number, the determination of the rearrangement position is continued.

Next, an example is shown in which the rearrangement position of the shelf S with pod ID_27 at the node of node ID_E9 is determined to be node ID_A6 as indicated by an arrow R43. In this case, the shelves S that need to be moved are five shelves, namely, the shelf S with node ID_A3, the shelf S with node ID_F1, the shelf S with node ID_A6, the shelf S with node ID_F4, and the shelf S with node ID_E9. In this case, since the number of shelves S that need to be moved has reached the certain number, the determination of the rearrangement position ends.

As described above, in the fifth modification, efficiency of determination processing of the rearrangement position may be improved by reducing the number of shelves S as target of rearrangement. Since the rearrangement positions are determined in descending order of the improvement rate, although the number of shelves S as targets of rearrangement is small, the conveyance efficiency is expected to be improved.

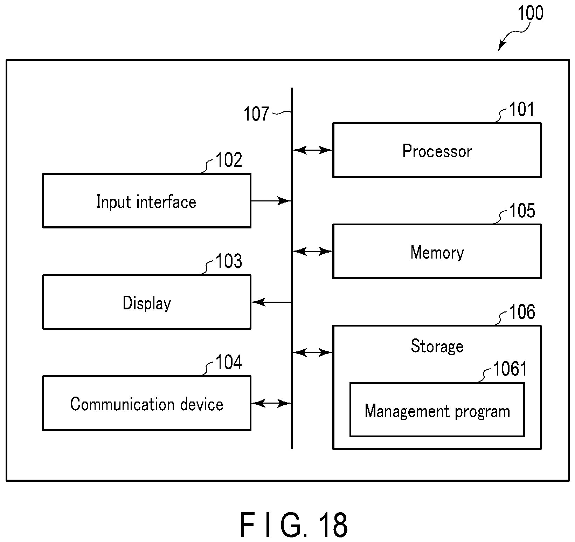

Next, an exemplary hardware structure of the management device 100 will be described below. FIG. 18 is a diagram showing an exemplary hardware structure of the management device 100. As illustrated in FIG. 18, the management device 100 is a computer that includes a processor 101, an input interface 102, a display 103, a communication device 104, a memory 105, and a storage 106. The processor 101, the input interface 102, the display 103, communication device 104, the memory 105, and the storage 106 are connected by a bus 107.

The processor 101 controls the entire sequence of operations of the management device 100. Upon execution of a management program 1061 stored in the storage 106, the processor 101 functions as a managing section 11, an operation schedule generating section 12, an operation controller 13, a mobile unit managing section 14, and a communication section 15. The processor 101 may be a CPU. Alternatively, the processor 101 may be an MPU, a GPU, an ASIC, an FPGA, or the like. The processor 101 may be a single CPU, or multiple CPUs.

The input interface 102 includes input devices such as a touch panel, a keyboard, and a mouse. In a case where an entry is made on the input device, a signal corresponding to this entry is input to the processor 101 by way of the bus 107. The processor 101 performs various types of processing in accordance with this signal.

The display 103 may be a liquid crystal display, an organic EL display, or the like. The display 103 may be used to inform the user of the management device 100 of the improvement rate, for example.

The communication device 104 allows the management device 100 to communicate with external devices. The communication device 104 functions as the communication section 15 together with the processor 101. The external devices include mobile units. The communication device 104 may be designed to establish wired communications or wireless communications.

The memory 105 includes a ROM and a RAM. A ROM is a nonvolatile memory. The ROM stores therein a start-up program for the management device 100 and the like. A RAM is a volatile memory. The RAM is used, for example, as a working memory during the processing of the processor 101.

The storage 106 may be a hard disk drive or a solid state drive. The storage 106 stores therein various programs to be executed by the processor 101, including the management program 1061. The storage 106 may include the travel area DB 21, the node DB 22, the link DB 23, the mobile unit DB 24, the task DB 25, and the operation schedule DB 26. Alternatively, the travel area DB 21, node DB 22, link DB 23, mobile unit DB 24, task DB 25, and operation schedule DB 26 may be stored in a server or the like that can communicate with the management device 100. In such a configuration, the management device 100 transmits and receives the necessary data to and from the server by use of the communication device 104.

The instructions in the processing procedure of the above embodiment may be implemented based on a software program. A general-purpose computer system may store this program so that effects similar to the ones obtained by the aforementioned management device may be achieved by reading the program. The instructions described in the embodiment may be stored as a computer-executable program in a magnetic disk (e.g., flexible disk or hard disk), an optical disk (e.g., CD-ROM, CD-R, CD-RW, DVD-ROM, DVD$\pm$R, DVD$\pm$RW, or Blu-ray (registered trademark) disc), a semiconductor memory, or any storage medium of a similar type. The storage medium may be of any type readable on a computer or an embedded system. By reading the program from this storage medium and implementing, based on the program, the instructions described in the program on the CPU, the computer can realize operations similar to those of the management device according to the embodiment. If the computer acquires or reads the program, the acquisition or reading may be performed via a network.

Furthermore, part of the processing of the present embodiment may be executed on an operating system (OS) running on a computer based on the instructions of a program installed from a storage medium into the computer or embedded system, database management software, or middleware (MW) such as a network.

The storage medium of the present embodiment is not limited to a medium provided independently from a computer or an embedded system, and the medium may include a storage medium that stores or temporarily stores a program by downloading it through a LAN or the Internet.

The storage medium is not limited to a single medium. The processing of the present embodiment is executed from multiple media, and the media may have any configuration.

The computer or embedded system according to the present embodiment may execute the processing based on the programs stored in the storage medium, and it may have a structure of a personal computer or a microcomputer, or a structure of a system in which multiple devices are mutually connected via a network.

The computer according to the present embodiment is not limited to a personal computer. The computer here refers to a computational processing device, a computer or a microcomputer included in the information processing device, and may collectively refer to any apparatus or device that can realize functions of the present embodiment by a program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A mobile unit management device for a mobile unit, the device comprising a managing section that

   calculates a score from a conveyance frequency for a workstation of each of shelves arranged in a facility and a distance between each of the shelves and the workstation, and
   determines a rearrangement position of each of the shelves based on the score and a current position of each of the shelves.

2. The mobile unit management device according to claim 1, wherein
   the conveyance frequency is a conveyance frequency in a past designated period.

3. The mobile unit management device according to claim 1, wherein
   the conveyance frequency is a conveyance frequency counted based on order information that determines assignment of a future task of the mobile unit.

4. The mobile unit management device according to claim 1, wherein
   the distance is a Manhattan distance between each of the shelves and a representative point of the workstation.

5. The mobile unit management device according to claim 1, wherein
   the managing section determines the rearrangement position of each of the shelves in descending order of the score or in descending order of an improvement rate of the score before and after rearrangement.

6. The mobile unit management device according to claim 1, wherein

the managing section determines the rearrangement position so as to circuit by shifting, one by one, the rearrangement position of at least some of the shelves.

7. The mobile unit management device according to claim 6, wherein
a number of the rearrangement positions that circuits is same as a number of the mobile units.

8. The mobile unit management device according to claim 1, wherein

the workstation is divided into a workstation dedicated for storage and a workstation dedicated for retrieval, and
the rearrangement position of each of the shelves is determined based on whether each of the shelves is empty in addition to the score and the current position of each of the shelves.

9. The mobile unit management device according to claim 1, wherein
the managing section excludes the shelf in which the improvement rate of the score before and after rearrangement is poor from a target for determination of the rearrangement position.

10. The mobile unit management device according to claim 1, wherein
the managing section determines a rearrangement position of each of a plurality of the shelves so as not to cause a collision in a conveyance route at a time of rearrangement of the shelves.

11. The mobile unit management device according to claim 1, wherein
the managing section displays the improvement rate of the score before and after rearrangement on a display device.

12. The mobile unit management device according to claim 1, further comprising

an operation schedule generating section that generates an operation schedule of the mobile unit so as to convey the shelves to the rearrangement position, wherein
the managing section controls an operation of the mobile unit so that a second mobile unit moves a second shelf having a first shelf as the rearrangement position at a timing when a first mobile unit starts to move the first shelf to the rearrangement position based on the operation schedule.

13. The mobile unit management device according to claim 12, wherein
the managing section moves the mobile unit in descending order of the improvement rate of the score before and after rearrangement.

14. The mobile unit management device according to claim 12, wherein
the managing section controls the operation of the mobile unit so that at least a shelf is conveyed to a temporary position by the mobile unit before starting conveyance of the shelves to the rearrangement position.

15. A mobile unit management method comprising:

calculating a score from a conveyance frequency for a workstation of each of shelves arranged in a facility and a distance between each of the shelves and the workstation; and
determining a rearrangement position of each of the shelves based on the score and a current position of each of the shelves.

16. A storage medium that stores a mobile unit management program configured to cause a computer to

calculate a score from a conveyance frequency for a workstation of each of shelves arranged in a facility and a distance between each of the shelves and the workstation, and
determine a rearrangement position of each of the shelves based on the score and a current position of each of the shelves.

F I G. 1

S

| A1 | A2 | A3 | A4 | A5 | A6 | A7 | A8 | A9 |
|----|----|----|----|----|----|----|----|----|
|    |    |    |    |    |    |    |    |    |
| C1 |    | C3 | C4 |    | C6 | C7 |    | C9 |
| D1 |    | D3 | D4 |    | D6 | D7 |    | D9 |
| E1 |    | E3 | E4 |    | E6 | E7 |    | E9 |
| F1 |    | F3 | F4 |    | F6 | F7 |    | F9 |
|    |    |    |    |    |    |    |    |    |
|    |    |    |    |    |    |    |    |    |

| a8 | a1 | a2 | a3 |
|----|----|----|----|
| a7 | a6 | a5 | a4 |

WSa

| b3 | b2 | b1 | b8 |
|----|----|----|----|
| b4 | b5 | b6 | b7 |

WSb

# F I G. 2

| Node ID | X coordinate | Y coordinate |
|---------|--------------|--------------|
| A1 | x1 | y1 |
| A2 | x2 | y2 |
| ... | ... | ... |
| A9 | X9 | y9 |
| B1 | X1 | Y2 |
| ... | ... | ... |
| J9 | X9 | y10 |

## F I G. 3

| Link ID | First node ID | Second node ID | Node directionality |
|---------|---------------|----------------|---------------------|
| I1 | A1 | B1 | Bidirectional |
| I2 | A2 | B2 | Bidirectional |
| ... | ... | ... | ... |

## F I G. 4

FIG. 5

| Pod ID | Conveyance frequency for WSa | Conveyance frequency for WSb |
|---|---|---|
| ... | ... | ... |
| 4 | 11 | 0 |
| 5 | 5 | 5 |
| 6 | 0 | 9 |
| ... | ... | ... |

F I G. 6

| Node ID | Distance to WSa | Distance to WSb |
|---|---|---|
| F1 | 4 | 10 |
| F3 | 4 | 8 |
| F4 | 5 | 7 |
| F6 | 7 | 5 |
| F7 | 8 | 4 |
| F9 | 10 | 4 |
| E1 | 5 | 11 |
| ... | ... | ... |
| A9 | 15 | 9 |

F I G. 7

| Pod ID | Node ID | Score |
|--------|---------|-------|
| 4 | F1 | 44 |
|   | F3 | 44 |
|   | F4 | 55 |
|   | F6 | 77 |
|   | ... | ... |

F I G. 8

| Pod ID | Minimum score | Node ID |
|--------|---------------|---------|
| ... | ... | ... |
| 4 | 44 | F1,F3 |
| 5 | 60 | F3,F4,F6,F7 |
| 6 | 36 | F7,F9 |
| ... | ... | ... |

F I G. 9

F I G. 10

r1

| S | A1 | A2 | A3 | A4 | A5 | A6 | A7 | A8 | A9 |
|---|----|----|----|----|----|----|----|----|----|

r2

| C1 | | C3 | C4 | | C6 | C7 | | C9 |
|----|--|----|----|--|----|----|--|----|
| D1 | | D3 | D4 | | D6 | D7 | | D9 |
| E1 | | E3 | E4 | | E6 | E7 | | E9 |
| F1 | | F3 | F4 | | F6 | F7 | | F9 |

| a8 | a1 | a2 | a3 |
|----|----|----|----|
| a7 | a6 | a5 | a4 |

WSa

| b3 | b2 | b1 | b8 |
|----|----|----|----|
| b4 | b5 | b6 | b7 |

WSb

# F I G. 11

F I G. 12

F I G. 13

F I G. 14

S

| | | | | | | | | | |
|---|---|---|---|---|---|---|---|---|---|
| | B2 | B3 | B4 | | B6 | B7 | B8 | |
| | C2 | C3 | C4 | | C6 | C7 | C8 | |
| | D2 | D3 | D4 | | D6 | D7 | D8 | |
| | E2 | E3 | E4 | | E6 | E7 | E8 | |
| | F2 | F3 | F4 | | F6 | F7 | F8 | |

A1

A2

| a8 | a1 | a2 | a3 |
|----|----|----|----|
| a7 | a6 | a5 | a4 |

| b3 | b2 | b1 | b8 |
|----|----|----|----|
| b4 | b5 | b6 | b7 |

WSa

WSb

F I G. 15

S

| | | | | | | | | |
|---|---|---|---|---|---|---|---|---|
| | B2 | B3 | B4 | B5 | B6 | B7 | B8 | |
| | C2 | C3 | C4 | C5 | C6 | C7 | C8 | |
| | D2 | D3 | D4 | D5 | D6 | D7 | D8 | |
| | E2 | E3 | E4 | E5 | E6 | E7 | E8 | |
| | F2 | F3 | F4 | F5 | F6 | F7 | F8 | |

A3

| a8 | a1 | a2 | a3 |
|---|---|---|---|
| a7 | a6 | a5 | a4 |

| b3 | b2 | b1 | b8 |
|---|---|---|---|
| b4 | b5 | b6 | b7 |

WSa

WSb

F I G. 16

| S | A1 | A2 | A3 | A4 | A5 | A6 | A7 | A8 | A9 |

R43

R41

| C1 | | C3 | C4 | | C6 | C7 | | C9 |
| D1 | | D3 | D4 | | D6 | D7 | | D9 |
| E1 | | E3 | E4 | | E6 | E7 | | E9 |
| F1 | | F3 | F4 | | F6 | F7 | | F9 |

R42

| a8 | a1 | a2 | a3 |
| a7 | a6 | a5 | a4 |

WSa

| b3 | b2 | b1 | b8 |
| b4 | b5 | b6 | b7 |

WSb

F I G. 17

F I G. 18

Europäisches
Patentamt

European
Patent Office

Office européen
des brevets

## EUROPEAN SEARCH REPORT

**Application Number**

EP 25 15 6209

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUAN RUIPING ET AL: "The Pod Assignment Model and Algorithm in Robotic Mobile Fulfillment Systems", 2019 IEEE INTERNATIONAL CONFERENCE ON SERVICE OPERATIONS AND LOGISTICS, AND INFORMATICS (SOLI), IEEE, 6 November 2019 (2019-11-06), pages 99-103, XP033684764, DOI: 10.1109/SOLI48380.2019.8955103 [retrieved on 2020-01-09] * Sections II, II and IV.; figure 1 * | 1-16 | INV. G06Q10/08 G06Q50/40 |
| A | ADRIEN RIM\'EL\'E ET AL: "E-commerce warehousing: learning a storage policy", ARXIV.ORG, CORNELL UNIVERSITY LIBRARY, 201 OLIN LIBRARY CORNELL UNIVERSITY ITHACA, NY 14853, 21 January 2021 (2021-01-21), XP081864959, * the whole document * | 1-16 | |
| A | RUSLAN KRENZLER ET AL: "Deterministic Pod Repositioning Problem in Robotic Mobile Fulfillment Systems", ARXIV.ORG, CORNELL UNIVERSITY LIBRARY, 201 OLIN LIBRARY CORNELL UNIVERSITY ITHACA, NY 14853, 9 October 2018 (2018-10-09), XP080931502, * Section 5.6 * | 1-16 | **TECHNICAL FIELDS SEARCHED (IPC)** G06Q |

The present search report has been drawn up for all claims

| Place of search | Date of completion of the search | Examiner |
|---|---|---|
| Munich | 23 May 2025 | Jullien, Sami |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)